# DEMANDE DE BREVET EUROPEEN

(11) **EP 4 782 281 A1**
(43) Date de publication de la demande: **29.07.2026**
(21) Numéro de dépôt: 25220161.1
(22) Date de dépôt: 02.12.2025
(51) Int. Cl.: B60R 19/24, B60R 19/34, B60R 19/38

(54) **SOUS-ENSEMBLE STRUCTUREL POUR SYSTÈME D'ABSORPTION DE CHOCS DE VÉHICULE AUTOMOBILE ET VÉHICULE COMPRENANT UN TEL SOUS-ENSEMBLE**

(30) Priorité: 28.01.2025 FR 2500877
(71) Demandeur: Stellantis Auto SAS, 78300 Poissy (FR)
(72) Inventeur: PERON, RODOLPHE, 95220 HERBLAY (FR); BOUDAN, JULIEN, 91210 DRAVEIL (FR); NAKHLI, AHMED, 50050 MEKNES (MA)
(74) Mandataire: BCIP

(57) **Abrégé**

L'invention concerne un sous-ensemble structurel (21) pour système d'absorption de pare-chocs de véhicule automobile, ledit sous-ensemble (21) comprenant :
- une poutre (23) creuse formant absorbeur, ladite poutre (23) comprenant au moins une face (23a), dite face de fixation ;
- des équerres de fixation (33) fixées à ladite poutre (23), chacune des équerres (33) comprenant une première paroi (33a) fixée à ladite face de fixation (23a) de la poutre (23) et une deuxième paroi (33b) configurée pour qu'un élément adjacent y soit fixé ;
caractérisé en ce que ladite poutre (23) comprend des emboutis (29) aménagés sur ladite face de fixation (23a), la première paroi (33a) des équerres (33) et les emboutis (29) étant configurés, d'une part, pour présenter une coopération de forme l'un avec l'autre et, d'autre part pour être fixés l'un à l'autre au moyen d'un organe de fixation (31) traversant une ouverture oblongue (35), dite ouverture de fixation, aménagée dans la première paroi (33a) de l'équerre (33).

## Description

[ La présente invention concerne d'une manière générale la problématique de la fixation d'un pare-chocs de véhicule automobile ou d'une armature support d'un tel pare-chocs sur la poutre d'un système d'absorption de chocs (système destiné à être intégré dans un pare-chocs).

L'invention vise en particulier un sous-ensemble structurel de pare-chocs comportant une poutre et au moins une équerre de fixation. Plus particulièrement, la présente invention est avantageusement destinée à être intégrée à (ou monté dans) un pare-chocs de véhicule automobile, avant, arrière ou latéral.

De manière générale, les pare-chocs visent, en tout premier lieu, à absorber l'énergie des chocs lors d'une collision avec un obstacle, de sorte que la structure portante réelle du véhicule automobile ne soit autant que possible pas endommagée.

Ainsi, les pare-chocs des véhicules automobiles modernes comprennent généralement un système d'absorption de chocs recouvert d'une peau de pare-chocs, ledit système d'absorption comprenant un sous-ensemble structurel.

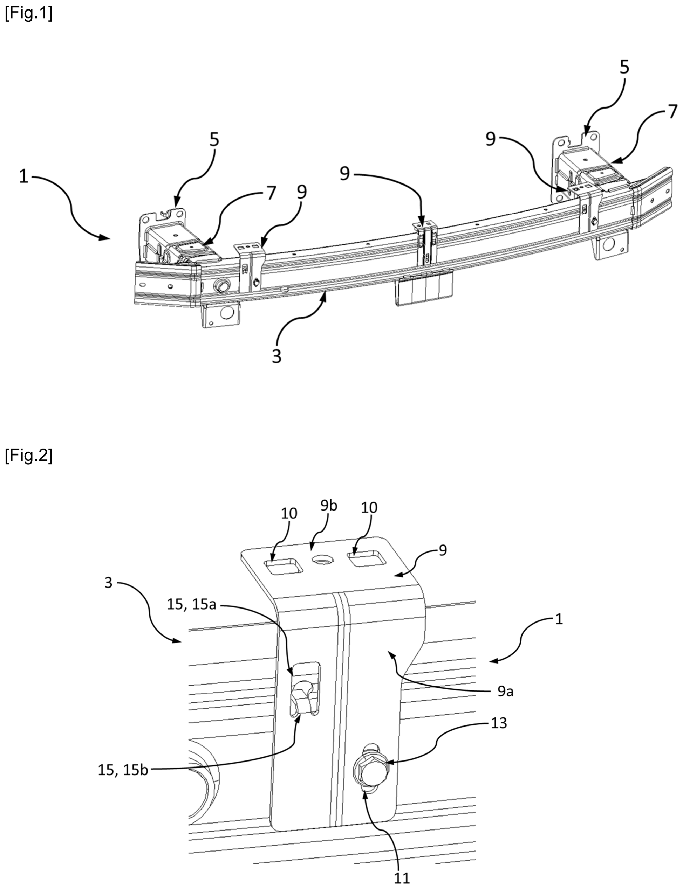

La [Fig. 1] illustre ainsi une vue schématique, en perspective de face d'un sous-ensemble structurel 1 pour système d'absorption de chocs de l'art antérieur. Ledit sous-ensemble structurel 1 comprend généralement une poutre 3 ou une traverse fixée par l'intermédiaire de platines 5 de fixations, ainsi que de caissons d'absorption 7 de chocs, à un élément de structure de véhicule.

Plus particulièrement, la poutre 3 ou traverse sert à communiquer (et à absorber) l'énergie cinétique résultant d'une collision avec un obstacle aux caissons d'absorption 7 de chocs, lesdits caissons 7 permettant la conversion de l'énergie du choc en un travail de déformation.

La poutre 3 du sous-ensemble structurel 1, et les pare-chocs embarquant un tel sous-ensemble 1, sont conçus pour leur résistance et leurs caractéristiques d'impact, afin de répondre aux normes et règlements nationaux et internationaux, ainsi qu'aux exigences de sécurité des compagnies d'assurance pour les véhicules particuliers.

La poutre 3 est également conçue pour : minimiser le poids total du véhicule, pour maximiser les rapports résistance/poids, pour s'adapter aux espaces confinés du véhicule dans lesquels sont disposés les sous-ensembles structurels 1, et pour satisfaire aux exigences esthétiques et fonctionnelles des extrémités, notamment avant et arrière, des véhicules automobiles.

Ledit sous-ensemble structurel 1 comprend également des équerres 9 de fixation qui sont classiquement des pièces rapportées fixées sur la poutre 3. Lesdites équerres 9 sont ainsi configurées pour être solidarisées à la poutre 3, mais également d'y solidariser, par exemple par vissage, une armature support de pare-chocs (ou directement le pare-chocs) et/ou des projecteurs de véhicule.

Ces équerres 9 sont généralement montées et réglées en usine pour assurer les jeux et affleurements des éléments de la face avant et/ou arrière du véhicule.

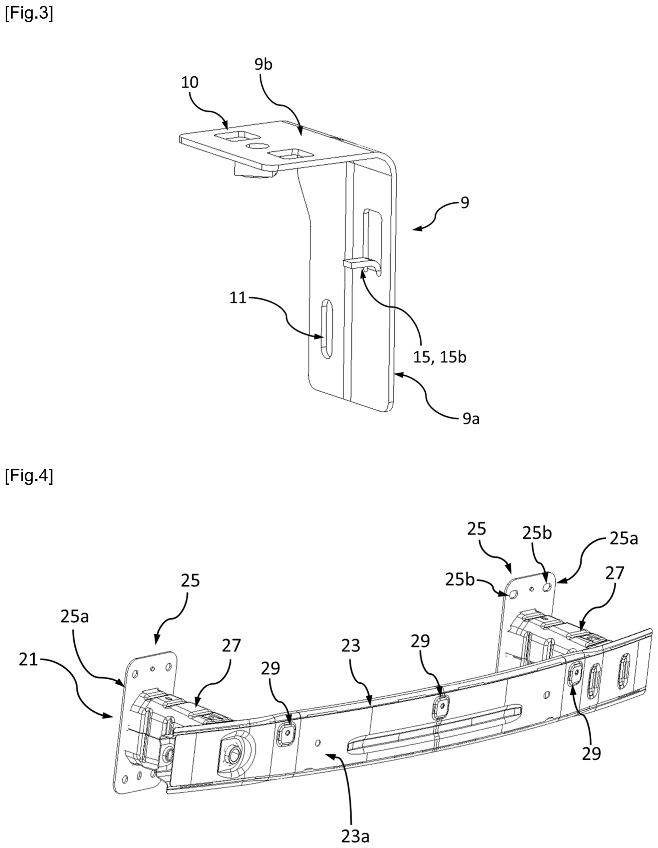

Les [Fig. 2] et [Fig. 3] illustrent des vues schématiques, en perspective, agrandies et partielles du sous-ensemble structurel de la [Fig. 1], respectivement d'une équerre 9 fixée sur la poutre 3 et d'une équerre de fixation 9 seule.

Plus particulièrement, une telle équerre 9 de fixation comprend classiquement une première paroi 9a destinée à être fixée contre une face de la poutre 3, généralement la face (verticale) tournée vers l'extérieur en position montée du sous-ensemble structurel 1, ainsi qu'une deuxième paroi 9b qui s'étend depuis l'une des extrémités de la première paroi 9a, sensiblement orthogonalement, à cette dernière.

Ainsi, en position montée, la seconde paroi 9b de l'équerre 9 surplombe la poutre 3, par exemple la face supérieure de la poutre 3, et comprend un ou plusieurs orifices 10 de sorte à permettre la fixation, par exemple par vissage, de l'armature support du pare-chocs (ou directement du pare-chocs), et/ou d'un projecteur de véhicule.

De plus, la première paroi 9a de l'équerre 9 comprend un trou oblong de fixation 11 permettant la fixation, par l'intermédiaire d'un moyen de fixation 13 adéquat (tel qu'une vis, un boulon, etc.), de l'équerre 9 sur la poutre 3, le moyen de fixation 13 venant coopérer avec un moyen complémentaire (non visible) aménagé sur ladite poutre 3, par exemple un trou fileté, un écrou serti aménagé dans un orifice, etc.

La forme oblongue du trou de fixation 11 de l'équerre 9 permet de fixer partiellement le moyen de fixation 13 dans le moyen complémentaire de la poutre 3 et d'avoir un débattement, qui est ici vertical, de l'équerre 9 avant sa fixation définitive (de manière serrée donc) à ladite poutre 3.

Ces équerres 9 sont ainsi généralement montées et réglées en usine pour assurer les jeux et affleurements des éléments de la face avant ou arrière du véhicule.

Cependant, les équerres 9 supportant l'armature de pare-chocs sont livrées assemblées sur le sous-ensemble structurel 1, mais non serrées, afin de permettre leurs réglages lors de l'assemblage d'éléments adjacents, tels que l'armature.

Mais, afin de conserver les équerres 9 dans une position idéale, il est nécessaire que ledit sous-ensemble structurel 1 comprenne un système anti-rotation 15 configuré pour que les équerres 9 restent en position et ne se déplacent pas lors du transport dudit sous-ensemble structurel 1, notamment que les équerres 9 ne tournent pas autour d'un axe (tel que l'axe défini par le moyen de fixation).

Ainsi, le sous-ensemble structurel 1 comprend :
- un orifice supplémentaire 15a aménagé dans la poutre 3 (par exemple sur la face de la poutre 3 où est aménagée l'ouverture de fixation 11 de la poutre 3), généralement à proximité de ladite ouverture de fixation 11 ;
- un élément saillant ou doigt anti-rotation 15b qui est aménagé sur l'équerre 9, avantageusement sur la première paroi 9a de l'équerre 9, et qui qui est configuré pour coopérer avec l'orifice supplémentaire 15a.

Le système anti-rotation est ainsi formé par la coopération entre l'orifice supplémentaire 15a et l'élément saillant 15b et permet ainsi d'éviter toute rotation des équerres 9 de fixation prémontées tout en améliorant leurs possibilités de réglage vertical. Ceci permet notamment de positionner leur seconde paroi 9b au plus près de la poutre 3 de sorte à permettre d'assurer la fixation de projecteurs ou d'autres éléments sur ces équerres 9.

Cependant, lorsqu'il y a livraison du système d'absorption 1 sur lequel les équerres 9 sont montées, seulement pré-serrées, sur la poutre 3, il y a un risque que le doigt anti-rotation 15b sorte de l'orifice 15a défini sur la poutre 3, la poutre 3 étant alors livrée avec des équerres en mauvaise position. De plus, il y a un risque que ce doigt anti-rotation 15b soit tordu lors du transport et que celui-ci ne puisse pas remplir sa fonction.

De plus, la poutre d'un tel sous-ensemble pour système d'absorption étant un élément structurel et de sécurité, il est recommandé de minimiser le nombre d'ouvertures aménagées dans ladite poutre, ceci entre autres afin de garantir sa tenue mécanique.

La présente invention se propose ainsi de remédier à au moins un des inconvénients précités en proposant un nouveau type de sous-ensemble structurel pour système d'absorption de pare-chocs de véhicule automobile, ledit sous-ensemble comprenant :
- une poutre creuse formant absorbeur, ladite poutre comprenant au moins une face, dite face de fixation ;
- des équerres de fixation fixées à ladite poutre, chacune des équerres comprenant une première paroi fixée à ladite face de fixation de la poutre et une deuxième paroi configurée pour qu'un élément adjacent y soit fixé;
caractérisé en ce que ladite poutre comprend des emboutis aménagés sur ladite face de fixation, la première paroi des équerres et les emboutis étant configurés, d'une part, pour présenter une coopération de forme l'un avec l'autre et, d'autre part pour être fixés l'un à l'autre au moyen d'un organe de fixation traversant une ouverture oblongue, dite ouverture de fixation, aménagée dans la première paroi de l'équerre.

Le sous-ensemble selon l'invention permet ainsi d'avoir une poutre sur laquelle il est possible de prémonter des équerres de fixation, par exemple de manière non serrée, au moyen d'une seule ouverture aménagée sur la poutre et coopérant avec une équerre, donc en limitant le nombre d'ouvertures à aménager dans ladite poutre et en évitant ainsi d'altérer la résistance mécanique de la poutre, tout en ayant un système anti-rotation qui est ici réalisé par la coopération de forme entre l'embouti et la première paroi d'une équerre.

Selon une caractéristique possible, chacun desdits emboutis de la poutre présente une forme polygonale.

De manière avantageuse, l'embouti aménagé dans la face de fixation de la poutre s'étend en éloignement (donc vers l'extérieur) de la poutre. Ledit embouti présente de plus une forme polygonale, telle qu'un carré, un rectangle, un polygone, etc., de manière à ce que la coopération de forme entre la première paroi de l'équerre et de l'embouti empêche tout déplacement, notamment des rotations, de l'équerre par rapport à la poutre.

Selon une autre caractéristique possible, l'organe de fixation comprend une paire d'éléments d'engagement mâle et femelle.
De manière avantageuse, l'organe de fixation comprend au moins deux éléments distincts, tels que des éléments d'engagements mâle et femelle, configurés pour coopérer mécaniquement l'un avec l'autre, afin de solidariser l'équerre à la poutre.

Selon une autre caractéristique possible, l'élément d'engagement femelle est un écrou soudé à ladite poutre, et en ce que l'élément d'engagement mâle comprend une tige filetée.

L'élément d'engagement femelle est avantageusement un écrou soudé à la poutre, l'écrou étant par exemple soudé sur la face intérieure de la poutre et accessible à travers une ouverture traversante aménagée dans la face de fixation de ladite poutre, c'est une structure simple et peu onéreuse à fabriquer et à intégrer à la poutre, tout en limitant l'altération de la résistance mécanique de ladite poutre.

Tandis que l'élément d'engagement mâle est par exemple une vis, un boulon, etc. tant que celui-ci comprend une tige filetée qui est apte à traverser l'ouverture de fixation et venir coopérer avec l'élément d'engagement femelle, tel que l'écrou soudé, pour solidariser l'équerre à ladite poutre.

Selon une autre caractéristique possible, l'élément d'engagement femelle est aménagé au niveau de l'embouti de la poutre, de préférence de manière sensiblement centrée.
Avantageusement, l'élément d'engagement femelle est situé au niveau de l'embouti de manière à optimiser l'espace disponible et à diminuer les coûts.

Selon une autre caractéristique possible, l'ouverture de fixation présente une longueur d'au moins 25 mm, et de préférence d'au moins 30 mm.
La longueur de l'ouverture de fixation, c'est-à-dire la plus grande dimension d'extension de l'ouverture de fixation, présente ainsi une longueur minimale, afin de permettre un débattement, par exemple vertical, afin de positionner et d'ajuster au mieux la position des équerres et donc des éléments qui y sont fixés.

Selon une autre caractéristique possible, en position montée du sous-ensemble, la face de fixation de la poutre et la première paroi de l'équerre s'étendent chacun dans un plan sensiblement vertical.

Selon une autre caractéristique possible, la première paroi de l'équerre comprend un embouti, l'ouverture de fixation étant aménagée sur ledit embouti, les emboutis aménagées respectivement sur la première paroi et sur la poutre étant configurés pour s'emboiter au moins en partie l'un dans l'autre (et présenter une coopération de forme l'un avec l'autre).

Le fait que l'ouverture de fixation soit aménagée sur l'embouti de l'équerre favorise la bonne tenue mécanique de ladite équerre.

Selon une autre caractéristique possible, lesdits emboutis de la poutre sont aménagés à intervalles réguliers selon la longueur de ladite poutre.
De manière avantageuse, la disposition à intervalles réguliers permet de garantir un comportement mécanique homogène de ladite poutre (notamment en cas d'accident), tout en permettant d'optimiser le support d'éléments adjacents fixés auxdites équerres.

Selon une autre caractéristique possible, le système comprend au moins une platine de fixation d'une part, reliée à ladite poutre, et d'autre part, configurée pour permettre la solidarisation (ou fixation) dudit système d'absorption à un élément de structure de véhicule automobile, tel qu'un brancard de véhicule automobile.

Selon une autre caractéristique possible, le système comprend au moins un caisson d'absorption de chocs fixé, d'une part, à ladite platine, et d'autre part, à ladite poutre.

Ledit caisson d'absorption de chocs, également désigné, en langue anglaise, sous le terme « crashbox », est un dispositif configuré pour se déformer lors d'une collision, transformant ainsi l'énergie cinétique du choc en déformation mécanique, et atténuant l'énergie cinétique transmise à l'élément de structure sur lequel est fixé le système d'absorption de chocs selon l'invention. De manière avantageuse, chacune des extrémités longitudinales opposées dudit caisson est respectivement fixée à la platine et à la poutre, ceci notamment pour maximiser l'énergie cinétique que le caisson est apte à dissiper.

Selon une autre caractéristique possible, le caisson d'absorption est fixé par soudage à la platine et à la poutre.
De manière avantageuse, la fixation du caisson respectivement à la platine et à la poutre est réalisée par soudage, par exemple respectivement au niveau des extrémités longitudinales opposées dudit caisson. Le soudage d'un caisson d'absorption de chocs est par exemple réalisé par soudage laser, soudage à l'arc, soudage MIG, etc.

Selon une autre caractéristique possible, ladite poutre présenter une forme allongée.

Selon une autre caractéristique possible, lorsque le sous-ensemble structurel est en position montée dans un véhicule automobile, ladite poutre dudit sous-ensemble est située dans un plan sensiblement horizontal et/ou s'étend sensiblement orthogonalement à l'axe longitudinal du véhicule.

Selon une autre caractéristique possible, lorsque le sous-ensemble structurel est en position montée dans un véhicule automobile, la section fermée de ladite poutre présente au moins deux faces opposées situées sensiblement dans un plan horizontal (ou lesdites faces sont situées dans un plan sensiblement parallèle à l'axe longitudinal du véhicule), ainsi qu'au moins deux faces opposées situées sensiblement dans un plan vertical.

L'invention se rapporte de plus à un système d'absorption de chocs pour véhicule automobile, caractérisé en ce que ledit système d'absorption de chocs comprend un sous-ensemble structurel tel que défini ci-avant.

L'invention se rapporte en outre à un véhicule automobile, tel qu'un véhicule thermique, électrique ou hybride, caractérisé en ce que ledit véhicule comporte un système d'absorption de chocs tel que défini ci-avant.

L'invention sera mieux comprise, et d'autres buts, détails, caractéristiques et avantages de celles-ci apparaîtront plus clairement au cours de la description suivante d'un mode de réalisation particulier de l'invention, donnée uniquement à titre illustratif et non limitatif, en référence aux dessins annexés, sur lesquels :
- La [Fig.1] illustre une vue schématique, en perspective et de face d'un sous-ensemble structurel de l'art antérieur pour un système d'absorption de chocs ;
- la [Fig. 2] est une vue schématique, agrandie et partielle du sous-ensemble structurel de la [Fig. 1] ;
- la [Fig. 3] est une vue schématique, agrandie et partielle d'une équerre de fixation du sous-ensemble de la [Fig. 1] ;
- la [Fig. 4] illustre une vue schématique et en perspective de trois quarts d'un sous-ensemble structurel, selon l'invention, pour un système d'absorption de chocs de véhicule automobile ;
- la [Fig. 5] est une vue schématique, agrandie, partielle et en perspective d'un embouti d'une poutre du sous-ensemble de la [Fig. 4] ;
- la [Fig. 6] est une autre vue schématique, agrandie, partielle et en perspective de l'embouti de la [Fig. 5];
- la [Fig. 7] illustre une vue schématique, en perspective de trois quarts d'une équerre de fixation du sous-ensemble de la [Fig. 4] ;
- la [Fig. 8] illustre une vue schématique, en perspective de face d'une équerre de fixation montée sur une poutre du sous-ensemble de la [Fig. 4].

Dans la description qui suit, le terme « comprendre » est synonyme de « inclure » et n'est pas limitatif en ce qu'il autorise la présence d'autres éléments dans le véhicule, ou la structure auxquels il se rapporte. Il est entendu que le terme « comprendre » inclut les termes « consister en ». De même, les termes « inférieur », « supérieur », « avant », « arrière », « longitudinal » et « transversal » s'entendront par rapport à l'orientation générale du véhicule automobile, que celui-ci soit thermique, hybride ou électrique.

Le terme « inférieur » désignera une proximité au sol plus importante que « supérieur » selon l'axe vertical. Par ailleurs, on notera que sur les différentes figures, les mêmes références désignent des éléments identiques ou similaires.

Dans la présente demande, on notera qu'on entend par « sensiblement parallèle », une direction s'écartant d'au plus 20°, voire d'au plus 10° ou d'au plus 5° d'une direction parallèle. On notera également qu'on entend par « sensiblement orthogonale », une direction s'écartant d'au plus 20°, voire d'au plus 10° ou d'au plus 5° d'un angle d'une valeur de 90°.

La [Fig. 1] illustre ainsi une vue schématique, en perspective et de face d'un sous-ensemble structurel 21, selon l'invention, pour un système d'absorption de chocs, système d'absorption destiné à être monté dans un véhicule automobile, par exemple un véhicule thermique, électrique ou hybride.

Ledit sous-ensemble 21 est par exemple destiné à être monté entre un élément de structure du véhicule, tel qu'un brancard (non représenté) et une peau de pare-chocs (non représentée). Le sous-ensemble 21 trouve une utilisation avantageuse en partie basse des véhicules automobiles, par exemple dans les systèmes d'absorption de chocs des pare-chocs inférieurs, avant et/ou arrière, d'un véhicule automobile.

Le sous-ensemble 21 comprend ainsi :
- au moins une poutre 23 creuse formant absorbeur ;
- au moins une platine 25 de fixation d'une part, reliée à ladite poutre 23, et d'autre part, configurée pour permettre la solidarisation dudit système 21 d'absorption à un élément de structure de véhicule automobile, tel qu'un brancard de véhicule automobile ;
- au moins un caisson 27 d'absorption de chocs fixé, d'une part, à ladite platine 25, et d'autre part, à ladite poutre 23 (caisson 27 également désigné en langue anglaise sous le terme de « crashbox »).

On notera que le nombre de poutres 23, de platines 25 et de caissons 27 peut être variable, et que le nombre de platines 25 et de caissons 27 est par exemple fonction de la longueur de la poutre 23 et/ou de son poids. Dans le mode de réalisation présentement décrit, le sous-ensemble 21 comprend une poutre 23, deux platines 25, ainsi que deux caissons 27 interposés entre la poutre 23 et respectivement une des deux platines 25.

Ladite poutre 23 présente généralement une forme allongée et est formée d'une plaque métallique pliée ou de plaques pliées et fixées ensemble pour présenter une section transversale fermée. Lorsque le sous-ensemble structurel 21 est en position montée dans un véhicule automobile, ladite poutre 23 dudit sous-ensemble 21 est située dans un plan sensiblement horizontal et/ou s'étend sensiblement orthogonalement à l'axe longitudinal du véhicule.

De plus, la section transversale fermée de la poutre 23 présente avantageusement une forme sensiblement polygonale, telle qu'une forme carrée, rectangulaire, hexagonale, etc.

En outre, la section transversale fermée de la poutre 23 présente avantageusement, lorsque le sous-ensemble 21 est en position montée dans un véhicule automobile, au moins deux faces opposées situées sensiblement dans un plan horizontal, ainsi que deux faces opposées situées sensiblement dans un plan vertical.

Dans le mode de réalisation présentement décrit, la poutre 23 présente une section transversale sensiblement rectangulaire, et est configurée pour qu'en position montée sur le véhicule, des côtés opposés du rectangle soient situés sensiblement dans un plan horizontal, ou soient situés sensiblement parallèle à la direction de la force que pourrait subit ladite poutre 23 en cas de collision (et correspondant à une direction sensiblement parallèle à l'axe longitudinal du véhicule pour un sous-ensemble situé à l'avant ou l'arrière du véhicule).

La poutre 23 présente ainsi une face 23a sensiblement située dans un plan vertical et orientée vers l'extérieur, face 23a désignée aussi sous le terme de « face de fixation ».

Ladite poutre 23 peut également présenter un galbe ou une courbure, par exemple pour des effets esthétiques, épouser la forme du pare-chocs, présenter une meilleure tenue mécanique aux chocs, et/ou optimiser la direction d'impact sur la poutre lors d'une collision.

Les platines 25 de fixation, quant à elles, comprennent généralement un corps principal 25a, par exemple monobloc, dans lequel est aménagée une structure 25b configurée pour permettre la fixation de ladite platine 25 à un élément de structure de véhicule automobile.

Avantageusement, la structure 25b de la platine, telle que des ouvertures, filetées ou non, est configurée pour permettre la fixation de ladite platine 25 à un élément de structure de véhicule automobile au moyen d'organes de fixation (non représentées), tels que des vis, rivets, boulons, etc., ceci afin de solidariser ladite platine 25 à un élément de structure du véhicule.

La coopération de la structure 25b de fixation de la platine 25 avec des organes de fixation permet ainsi de fixer, par l'intermédiaire des platines 25, le sous-ensemble 21 à un élément de structure de véhicule.

Par ailleurs, au moins une partie de la platine 25, par exemple le corps principal 25a, est fixée à un desdits caissons d'absorption de chocs 27, par exemple par soudage au niveau d'une des extrémités longitudinales dudit caisson 27.

On notera que ledit caisson d'absorption de chocs 27 est également désigné, en langue anglaise, sous le terme « crashbox », et est un dispositif configuré pour se déformer lors d'une collision, transformant ainsi l'énergie cinétique du choc en déformation mécanique, et atténuant ainsi l'énergie cinétique transmise à l'élément de structure sur lequel est fixé le sous-ensemble 21 comprenant un tel caisson 27.

L'autre extrémité dudit caisson 27 est quant à elle fixée, avantageusement de manière directe, à ladite poutre 23, par exemple par soudage. Ainsi, les extrémités, par exemple longitudinales, opposées du caisson 27 sont fixées respectivement à la platine 25 et à la poutre 23.

La poutre 23 comprend en outre plusieurs emboutis 29, c'est-à-dire une déformation localisée de la matière constitutive de la poutre 23. Lesdits emboutis 29 présentent ainsi une forme polygonale, telle qu'une forme carrée, rectangulaire, hexagonale, etc.

Lesdits emboutis 29 de la poutre 23 sont ainsi aménagés sur l'une des faces de la poutre 23 à intervalles réguliers selon la longueur de ladite poutre 23. Lesdits emboutis 29 sont avantageusement aménagés sur la face de fixation 23a de la poutre 23 et s'étendent en éloignement (donc vers l'extérieur) de la poutre 23.

On notera que le nombre d'emboutis 29 dépend par exemple de la longueur de la poutre 23 et/ou de son poids. Dans le mode de réalisation présentement décrit, le nombre d'emboutis 29 est au nombre de trois, mais peut être un nombre quelconque en fonction du poids des éléments à faire supporter par ladite poutre 23 et/ou la longueur de ladite poutre 23.

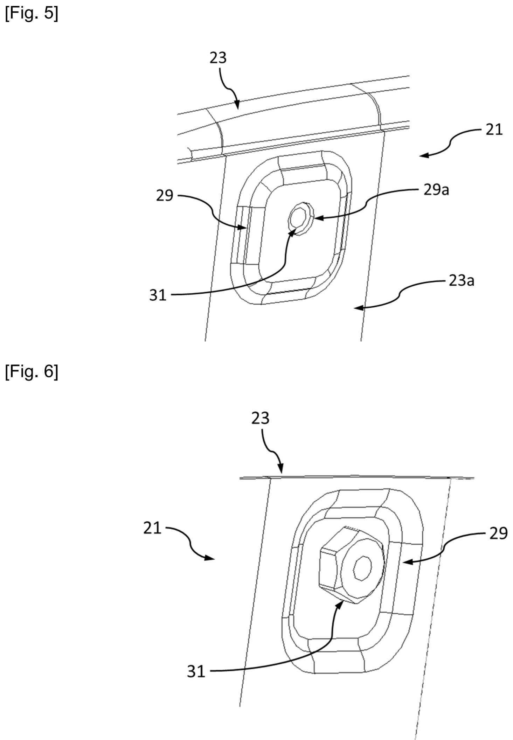

La [Fig. 5] est une vue schématique, agrandie, partielle et en perspective, de l'extérieur de la poutre 23, d'un embouti 29, tandis que la [Fig. 6] est une vue schématique, agrandie, partielle et en perspective, de l'intérieur de la poutre 23, d'un embouti 29.

La poutre 23 comprend ainsi une ouverture 29a aménagée dans chacun des emboutis 29, de préférence de manière sensiblement centrée. L'ouverture 29a est ainsi une ouverture traversante, c'est-à-dire qui traverse la paroi formant la face de fixation 23a de ladite poutre 23.

De plus, le sous-ensemble 21 comprend des écrous soudés 31 à la poutre 23, chacun desdits écrous 31 soudés étant disposé de manière à être coaxial avec l'ouverture 29a d'un embouti 29, c'est-à-dire que des écrous 31 sont fixés par soudure à l'intérieur de la poutre 23, au niveau de chacun des emboutis 29 et coaxialement auxdites ouvertures 29a.

Chacun desdits écrous soudés 31 (avec l'ouverture 29a) au niveau d'un embouti 29 de la poutre 23 fait ainsi office d'élément d'engagement femelle.

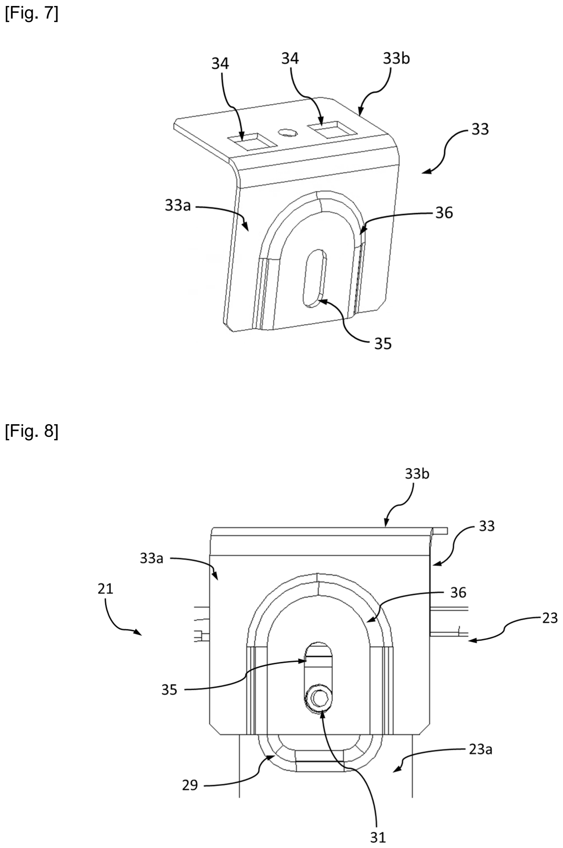

Ledit sous-ensemble 21 comprend en outre des équerres de fixation 33, une équerre 33 étant plus particulièrement illustrée à la [Fig. 7], lesdites équerres de fixation 33 étant configurées pour être fixées à ladite poutre 23.

Chacune des équerres 33 comprend une première paroi 33a configurée pour être fixée à ladite face de fixation 23a de la poutre 23 et une deuxième paroi 33b configurée pour qu'un élément adjacent y soit fixé, tel qu'une armature support du pare-chocs (ou directement du pare-chocs), un projecteur de véhicule, etc. La deuxième paroi 33b comprend par exemple un ou plusieurs orifices 34 de sorte à permettre la fixation d'un tel élément adjacent.

De plus, la deuxième paroi 33b s'étend depuis l'une des extrémités de la première paroi 33a, sensiblement orthogonalement, à cette dernière. En position montée, la seconde paroi 33b de l'équerre 33 surplombe la poutre 23, par exemple la face supérieure (l'une des faces s'étendant dans un plan sensiblement horizontal) de la poutre 23, la deuxième paroi 33b s'étendant alors dans un plan sensiblement horizontal. La première paroi 33a de l'équerre 33 s'étend, quant à elle, en position montée, dans un plan sensiblement vertical.

La première paroi 33a de l'équerre 33 est configurée pour présenter une coopération de forme avec les emboutis 29 de la poutre 23 de manière à ce que lorsque l'équerre 33 est montée sur l'embouti 29, alors la coopération de empêche tout déplacement, notamment des rotations, de l'équerre 33 par rapport à l'embouti 29 (et donc par extension par rapport à la poutre 23).

Comme illustré à la [Fig. 8], la coopération de forme entre la première paroi 33a de l'équerre 33 et l'embouti 29 de la poutre 23 est avantageusement réalisé au moyen d'un embouti 36 réalisé sur ladite première paroi 33a, mais cette coopération de forme peut être également réalisée au moyen de nervures aménagées sur la première paroi 33a venant se positionner (en position montée) de part et d'autre dudit embouti 29 de la poutre 23.

L'équerre 33 comprend par ailleurs une ouverture 35, dite ouverture de fixation, qui est aménagée sur la première paroi 33a. De plus, ledit sous-ensemble 21 comprend un élément d'engagement mâle (non représenté), tel qu'une vis, un boulon, etc. comprenant au moins une tige filetée, ainsi qu'une tête située à l'une des extrémités longitudinales de la tige filetée.

De plus, ladite ouverture de fixation 35 présente une forme oblongue, la dimension de plus grande longueur de l'ouverture de fixation 35 étant configurée pour s'étendre sensiblement verticalement lorsque l'équerre 33 est en position montée sur la poutre 23. Ladite ouverture de fixation 35 présente avantageusement une longueur d'au moins 25 mm, et de préférence d'au moins 30 mm.

Ainsi, les éléments d'engagement mâle et femelle 31 forment ainsi ensemble un organe de fixation configuré pour solidariser l'équerre 33 à l'embouti 29 de la poutre 23. L'élément d'engagement mâle, par exemple sa tige filetée, est configuré pour traverser l'ouverture de fixation 35 et coopérer avec l'écrou soudé 31 de la poutre 23.

Tant que l'élément d'engagement mâle n'est pas complètement inséré dans l'élément d'engagement femelle 31 (donc n'est pas monté serré), l'équerre 33 peut coulisser le long de la dimension d'extension de l'ouverture de fixation 35, afin de permettre le bon positionnement (vertical) de ladite équerre 33.

De plus, ladite équerre 33 peut être serrée de manière à permettre que la coopération de forme entre les emboutis 29 et 36, respectivement de la poutre 23 et de la première paroi 33a, empêche toute rotation de l'équerre 33, mais en autorisant le déplacement de l'équerre 33 selon la dimension d'extension de l'ouverture de fixation 35.

Une fois l'équerre 33 positionnée de manière adéquate, il y a alors engagement de l'élément d'engagement mâle dans l'élément d'engagement femelle 31 jusqu'à ce que l'équerre 33 soit fixée de manière serrée à ladite poutre 23, par exemple lorsque la tête de l'élément d'engagement mâle est en appui sur les parois de l'équerre délimitant l'ouverture de fixation 35, ladite équerre 23 n'ayant alors plus de degrés de liberté (et étant solidarisée fixement à ladite poutre).

On notera que l'embouti 36 de l'équerre 33 s'étend jusqu'à l'extrémité libre de la première paroi 33a (extrémité opposée à celle à laquelle est reliée la deuxième paroi 33b), ceci afin de faciliter le coulissement de l'embouti 36 de l'équerre 33 par rapport à l'embouti 29 de la poutre 23.

Dans une variante de réalisation non représentée de l'invention, l'embouti de la poutre s'étend vers l'intérieur de la poutre, et l'embouti de la première paroi de l'équerre s'étend, en position montée, en direction de la poutre. Ainsi, en position montée, l'embouti de l'équerre s'insère au moins partiellement dans l'embouti de la poutre pour qu'il y ait coopération de forme.

## Revendications

1. Sous-ensemble structurel (21) pour système d'absorption de pare-chocs de véhicule automobile, ledit sous-ensemble (21) comprenant :
- une poutre (23) creuse formant absorbeur, ladite poutre (23) comprenant au moins une face (23a), dite face de fixation ;
- des équerres de fixation (33) fixées à ladite poutre (23), chacune des équerres (33) comprenant une première paroi (33a) fixée à ladite face de fixation (23a) de la poutre (23) et une deuxième paroi (33b) configurée pour qu'un élément adjacent y soit fixé ;
**caractérisé en ce que** ladite poutre (23) comprend des emboutis (29) aménagés sur ladite face de fixation (23a), la première paroi (33a) des équerres (33) et les emboutis (29) étant configurés, d'une part, pour présenter une coopération de forme l'un avec l'autre et, d'autre part pour être fixés l'un à l'autre au moyen d'un organe de fixation (31) traversant une ouverture oblongue (35), dite ouverture de fixation, aménagée dans la première paroi (33a) de l'équerre (33).

2. Sous-ensemble structurel (21) selon la revendication précédente, **caractérisé en ce que** chacun desdits emboutis (29) de la poutre (23) présente une forme polygonale.

3. Sous-ensemble structurel (21) selon l'une quelconque des revendications précédentes, **caractérisé en ce que** l'organe de fixation comprend une paire d'éléments d'engagement mâle et femelle (31).

4. Sous-ensemble structurel (21) selon la revendication précédente, **caractérisé en ce que** l'élément d'engagement femelle est un écrou soudé (31) à ladite poutre (23), et **en ce que** l'élément d'engagement mâle comprend une tige filetée.

5. Sous-ensemble structurel (21) selon la revendication 3 ou 4, **caractérisé en ce que** l'élément d'engagement femelle (31) est aménagé au niveau de l'embouti de la poutre (23), de préférence de manière sensiblement centrée.

6. Sous-ensemble structurel (21) selon l'une quelconque des revendications précédentes, **caractérisé en ce que** l'ouverture de fixation (35) présente une longueur d'au moins 25 mm, et de préférence d'au moins 30 mm.

7. Sous-ensemble structurel (21) selon l'une quelconque des revendications précédentes, **caractérisé en ce que**, en position montée du sous-ensemble, la face de fixation de la poutre (23) et la première paroi (33a) de l'équerre (33) s'étendent chacun dans un plan sensiblement vertical.

8. Sous-ensemble structurel (21) selon l'une quelconque des revendications précédentes, **caractérisé en ce que** la première paroi (33a) de l'équerre (33) comprend un embouti (36), l'ouverture de fixation (35) étant aménagée sur ledit embouti (36), les emboutis (36, 29) aménagées respectivement sur la première paroi (33a) et sur la poutre (23) étant configurés pour s'emboiter au moins en partie l'un dans l'autre.

9. Système d'absorption de chocs pour véhicule automobile, **caractérisé en ce que** ledit système d'absorption de chocs comprend un sous-ensemble structurel (21) selon l'une quelconque des revendications précédentes.

10. Véhicule automobile, **caractérisé en ce que** ledit véhicule comporte un système d'absorption de chocs selon la revendication précédente.
